# EUROPÄISCHE PATENTSCHRIFT

(11) **EP 1 501 705 B1**
(45) Veröffentlichungstag und Bekanntmachung des Hinweises auf die Patenterteilung: **05.04.2006**
(21) Anmeldenummer: 03747075.4
(22) Anmeldetag: 12.03.2003
(51) Int. Cl.: B60R 21/01

(54) **ANORDNUNG ZUM ERZEUGEN EINES AUSLÖSESIGNALS FÜR RÜCKHALTEMITTEL UND VERFAHREN ZUM AUSLÖSEN VON RÜCKHALTEMITTELN IN EINEM FAHRZEUG**
CONFIGURATION FOR GENERATING AN ACTIVATING SIGNAL FOR RESTRAINT MEANS AND METHOD FOR ACTIVATING RESTRAINT MEANS IN A VEHICLE
ENSEMBLE POUR GENERER UN SIGNAL DE DECLENCHEMENT DE DISPOSITIFS DE RETENUE DANS UN VEHICULE ET PROCEDE POUR LES DECLENCHER

(30) Priorität: 23.04.2002 DE 10218020
(43) Veröffentlichungstag der Anmeldung: 02.02.2005
(73) Patentinhaber: ROBERT BOSCH GMBH, 70442 Stuttgart (DE)
(72) Erfinder: ROELLEKE, Michael, 71229 Leonberg-Hoefingen (DE); LOECKLE, Gerhard, 71634 Ludwigsburg (DE); LAHMANN, Robert, 70174 Stuttgart (DE); TRACHTERNA, Morten, 71701 Schwieberdingen (DE); SCHMID, Michael, 70806 Kornwestheim (DE); KROENINGER, Mario, 77815 Buehl (DE); LORENZ, Carsten, 89075 Ulm (DE); LANZERATH, Martin, 75391 Gäckingen (DE)
(86) Internationale Anmeldenummer: PCT/DE2003/000780
(87) Internationale Veröffentlichungsnummer: WO 2003/091076

(56) Entgegenhaltungen:
- WO-A-97/49578
- DE-A- 19 744 085

## Beschreibung

### Stand der Technik

Die Erfindung betrifft eine Anordnung zum Erzeugen eines Auslösesignals für Rückhaltemittel in einem Fahrzeug, wobei die Rückhaltemittel für den Fall eines Aufpralls des Fahrzeugs vorgesehen sind, wie z.B. einen Frontalaufprall oder einen Seitenaufprall. Dementsprechend umfasst die Anordnung Mittel zum Erkennen eines Aufpralls, die im Falle eines Aufpralls ein Anforderungssignal für die der Aufprallart entsprechenden Rückhaltemittel erzeugen. Außerdem sind Mittel zum Erkennen einer Drehbewegung des Fahrzeugs um mindestens eine Fahrzeugachse - Längsachse (x) und/oder Querachse (y) - vorgesehen, die ein entsprechendes Statussignal erzeugen.

Die Erfindung betrifft ferner ein Verfahren zum Auslösen von Rückhaltemitteln, die für den Fall eines Aufpralls des Fahrzeugs vorgesehen sind. Bei diesem Verfahren werden neben Informationen über einen etwaigen Aufprall des Fahrzeugs auch Informationen über eine etwaige Drehbewegung des Fahrzeugs um mindestens eine Fahrzeugachse - Längsachse (x) und/oder Querachse (y) - erfasst und ausgewertet.

Bei den aus der Praxis bekannten Fahrzeugen, die mit Rückhaltemitteln ausgestattet sind, erfolgt das Auslösen der Rückhaltemittel bei Unfällen mit Frontal- oder Seitenaufprall in der Regel unabhängig vom Unfallhergang. Insbesondere wird bei den bekannten Auslösealgorithmen nicht berücksichtigt, ob im Unfallverlauf ein Fahrzeugüberschlag eintritt oder bereits eingetreten ist. Dadurch kann es beispielsweise zum Auslösen des Fahrer- und Beifahrerairbags kommen, obwohl das Fahrzeug nach einem Überschlag auf dem Dach liegt, die Fahrzeugkabine durch den Überschlag deutlich verkleinert ist und sich die Insassen in einer undefinierten Position befinden. Wenn das Fahrzeug bei einem Überschlag auf die Seite fällt, ist das Auslösen des entsprechenden Seitenairbags zumindest dann kritisch, wenn sich ein Fahrzeuginsasse direkt über dem Seitenairbag befindet. Insgesamt hat sich in der Praxis gezeigt, dass bei Unfällen, in deren Verlauf neben einem Aufprall auch eine kritische Drehbewegung des Fahrzeugs auftritt, vom Auslösen der für die Aufprallsituation vorgesehenen Rückhaltemittel ein nicht zu vernachlässigendes Verletzungsrisiko für die Fahrzeuginsassen ausgeht. Der Schutz der Fahrzeuginsassen kann dadurch verbessert werden, dass der Unfallhergang bei der Entscheidung über das Auslösen der Rückhaltemittel berücksichtigt wird.

Aus DE19744085A1 (Oberbegriff von Anspruch 1 bzw. 8) ist es bereits bekannt, bei einem seitlichen Aufprall eines Fahrzeugs auf einen Bordstein, eine Sicherheitseinrichtung dadurch rechtzeitig auszulösen, dass ein erster Schwellwertentscheider eine bezüglich der Längsachse des Fahrzeugs gemessene Drehrate oder eine daraus abgeleitete Größe mit einem Schwellenwert vergleicht. Ein zweiter Schwellenwertentscheider vergleicht einen Richtung der Querachse des Fahrzeugs gemessene Beschleunigung mit einem Schwellwert. Wenn beide Schwellwertentscheider gleichzeitig eine Überschreitung ihrer Schwellwellenwerte signalisieren, wird ein Auslösesignal für die Sicherheitseinrichtung abgegeben. Aus WO97/49578 ist ein Steuergerät bekannt, dass einen Gurtstraffer, einen Airbag, einen Überrollbügel oder ein mechanisches Fahrzeugtürschloss betätigt. Dafür legt eine Sensorplattform vor, um eine Vielzahl von Parametern wie eine Beschleunigung, einen Wankwinkel und einen Überrollwinkel eines Fahrzeugs zu messen.

### Vorteile der Erfindung

Mit der vorliegenden Erfindung wird vorgeschlagen, das Kriterium für das Auslösen der für Aufprallsituationen vorgesehenen Rückhaltemittel zu verfeinern. Dazu sollen bei der Entscheidung über das Auslösen dieser Rückhaltemittel die Informationen über das etwaige Auftreten bzw. Vorliegen einer Drehbewegung des Fahrzeugs berücksichtigt werden. Dies wird bei einer Anordnung der eingangs genannten Art mit Hilfe einer Schaltung realisiert, die zum Erzeugen eines Auslösesignals das Anforderungssignal mit dem Statussignal - und damit die entsprechenden Informationen über den Unfallhergang - verknüpft.

Es ist sinnvoll, den Einsatz der im Fahrzeug insgesamt vorhandenen Rückhaltemittel zu koordinieren, insbesondere wenn sich das Fahrzeug im Verlauf eines Unfalls überschlägt oder wenn das Fahrzeug eine kritische Drehbewegung ausführt, bei der das Fahrzeug beispielsweise auf die Seite kippt. Es ist ferner erkannt worden; dass bei derartigen Unfällen das Auslösen der Rückhaltemittel, die die Fahrzeuginsassen bei einer kritischen Drehbewegung des Fahrzeugs, wie z.B. einem Überrollvorgang, schützen sollen, eine höhere Priorität hat als das Auslösen der Rückhaltemittel, die für Aufprallsituationen vorgesehen sind. Deshalb wird erfindungsgemäß das Kriterium für das Auslösen dieser Rückhaltemittel verfeinert. Zur Verfeinerung des Auslösekriteriums werden die Informationen genutzt, die zur Erkennung einer kritischen Drehbewegung des Fahrzeugs erfasst und ausgewertet werden, da sowohl die Lage und ggf. der Zustand des Fahrzeugs als auch die Lage der Insassen im Fahrzeuginnenraum mit Hilfe dieser Informationen relativ gut geschätzt werden können. Auf Basis dieser Schätzung kann dann besser entschieden werden, ob es für den Schutz der Insassen sinnvoll oder sogar schädlich ist, die für die vorliegende Aufprallsituation vorgesehenen Rückhaltemittel auszulösen.

Erfindungemäβ wird vorgeschlagen, die Rückhaltemittel im Fall einer Aufprallsituation für einen definierten Zeitraum tₕₐₗₜ zu sperren, wenn eine kritische Drehbewegung des Fahrzeugs erkannt worden ist. Dazu umfasst die Schaltung der erfindungsgemäßen Anordnung mindestens ein Halteglied, mit dem der Zeitraum tₕₐₗₜ bestimmt wird, in dem kein Auslösesignal erzeugt werden kann. Die Schaltung und insbesondere das Halteglied sind so konzipiert, dass die Rückhaltemittel im Falle eines Aufpralls nur dann gesperrt werden, wenn zusätzlich auch eine kritische Drehbewegung erkannt worden ist. Dazu werden die Informationen über das etwaige Auftreten bzw. Vorliegen einer Drehbewegung des Fahrzeugs an Hand von einem oder auch mehreren Kriterien ausgewertet, die sich von Fahrzeugtyp zu Fahrzeugtyp unterscheiden können und vom Fahrzeughersteller vorgegeben werden können.

Grundsätzlich gibt es unterschiedliche Möglichkeiten für die Realisierung der erfindungsgemäßen Anordnung sowie des erfindungsgemäßen Verfahrens.

Oftmals ist es sinnvoll, das Auslösen der Rückhaltemittel zu sperren oder zumindest zu verzögern, wenn sich das Fahrzeug vor dem Aufprall überschlagen hat. Um derartige Situationen zu erkennen, wird in einer vorteilhaften Variante der Erfindung die aktuelle Winkellage (αₓ und/oder α_{y}) des Fahrzeugs erfasst und ausgewertet. Immer wenn die aktuelle Winkellage (αₓ und/oder α_{y}) einen ersten entsprechend gewählten Schwellwert (α_{x min1} und/oder α_{y min1}) überschritten hat, wird davon ausgegangen, dass ein Überrollvorgang stattfindet oder stattgefunden hat, was als kritische Drehbewegung im Sinne der vorliegenden Erfindung erkannt wird.

Des Weiteren kann es sinnvoll sein, das Auslösen der Rückhaltemittel bereits zu sperren oder zumindest zu verzögern, wenn ein Überrollvorgang vorausgesagt wird - sich das Fahrzeug also noch nicht überschlagen hat, ein Überschlag aber unmittelbar bevorsteht. Zum Erkennen derartiger Situationen wird erfindungsgemäß vorgeschlagen, neben der aktuellen Winkellage (αₓ und/oder α_{y}) auch die aktuelle Winkelgeschwindigkeit (ωₓ und/oder ω_{y}) des Fahrzeugs zu erfassen und auszuwerten. In diesem Fall kann ein Überrollvorgang einfach vorausgesagt und damit vom Vorliegen einer kritischen Drehbewegung ausgegangen werden, wenn die aktuelle Winkellage (αₓ und/oder α_{y}) einen zweiten entsprechend gewählten Schwellwert (α_{x min2} und/oder α_{y min2}) überschreitet und auch die aktuelle Winkelgeschwindigkeit (ωₓ und/oder ω_{y}) einen entsprechend gewählten Schwellwert (ω_{x min} und/oder ω_{y min}) überschreitet.

An dieser Stelle sei angemerkt, dass das Auftreten eines Überrollvorgangs auch mit Hilfe von anderen Bewegungsparametern erkannt oder vorausgesagt werden kann, die ebenfalls mit Hilfe einer erfindungsgemäßen Anordnung und im Rahmen des erfindungsgemäßen Verfahrens erfasst und ausgewertet werden können. Außerdem können auch andere bzw. weitere Drehbewegungen des Fahrzeugs als kritisch definiert werden.

Wie bereits erwähnt, können die Kriterien, an Hand derer eine etwaige Drehbewegung des Fahrzeugs als kritisch oder unkritisch klassifiziert wird, beispielsweise vom Fahrzeughersteller bestimmt werden. Daneben kann auch der Zeitraum tₕₐₗₜ, in dem die Rückhaltemittel gesperrt sind, individuell bestimmt werden, und zwar nicht nur abhängig vom Fahrzeugtyp sondern auch abhängig vom Unfallhergang. So können die Rückhaltemittel im Fall eines Aufpralls beispielsweise dauerhaft (tₕₐₗₗ = ∞) oder auch nur für einen begrenzten Zeitraum (tₕₐₗₜ = const.) gesperrt werden, wenn eine kritische Drehbewegung erkannt worden ist.

Oftmals ist es vorteilhaft, die Rückhaltemittel mindestens solange zu sperren, bis das Fahrzeug zur Ruhe gekommen ist. Um dies festzustellen, kann beispielsweise ein dritter Schwellwert für die aktuelle Winkellage (αₓ und/oder α_{y}) definiert werden. Wenn die aktuelle Winkellage (αₓ und/oder α_{y}) diesen dritten Schwellwert (α_{x min3} und/oder α_{y min3}) unterschreitet, kann davon ausgegangen werden, dass das Fahrzeug zur Ruhe gekommen ist. Eine andere Möglichkeit besteht darin, die aktuelle lineare Beschleunigung (aₓ, a_{y} und/oder a_{z}) des Fahrzeugs zu erfassen und auszuwerten. In diesem Fall kann beispielsweise dann davon ausgegangen werden, dass das Fahrzeug zur Ruhe gekommen ist, wenn eine Funktion der aktuellen linearen Beschleunigung f(aₓ, a_{y} und/oder a_{z}) einen definierten Schwellwert aₘᵢₙ unterschreitet.

### Zeichnungen

Wie bereits voranstehend ausführlich erörtert, gibt es unterschiedliche Möglichkeiten, die Lehre der vorliegenden Erfindung in vorteilhafter Weise auszugestalten und weiterzubilden. Dazu wird einerseits auf die den unabhängigen Patentansprüchen nachgeordneten Patentansprüche und andererseits auf die nachfolgende Beschreibung mehrerer Ausführungsbeispiele der Erfindung anhand der Zeichnungen verwiesen.

Die Figuren 1a bis 1c zeigen jeweils ein Prinzipschaltbild einer erfindungsgemäßen Anordnung zum Erzeugen eines Auslösesignals für Rückhaltemittel in einem Fahrzeug.

Die Figuren 2a bis 2d zeigen jeweils ein Prinzipschaltbild für eine Realisierungsmöglichkeit des Halteglieds einer erfindungsgemäßen Anordnung.

### Beschreibung der Ausführungsbeispiele

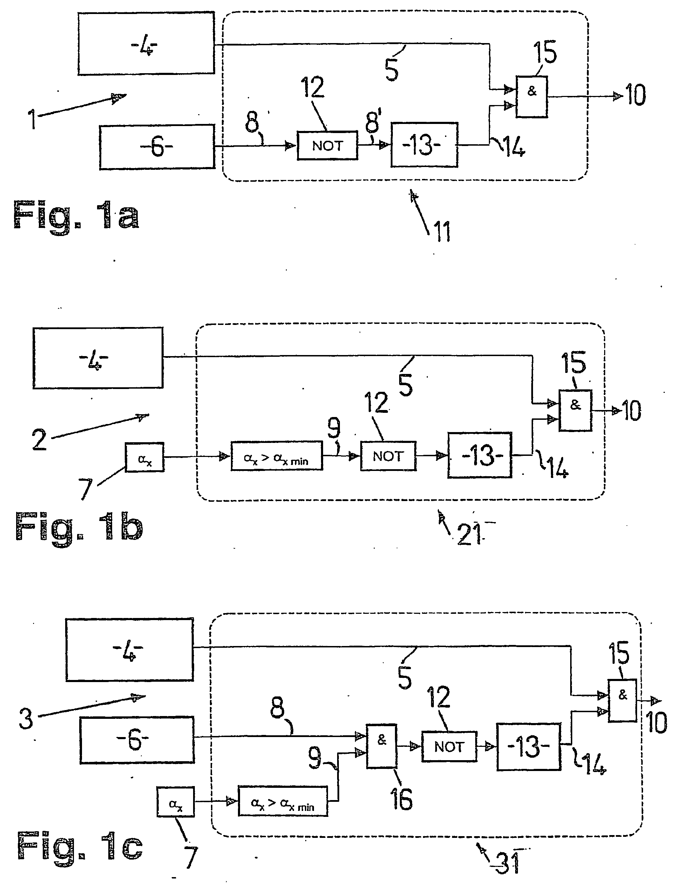

Die nachfolgend in Verbindung mit den Figuren 1a bis 1c beschriebenen Varianten einer erfindungsgemäßen Anordnung 1, 2 oder 3 dienen jeweils zum Erzeugen eines Auslösesignals für Rückhaltemittel in einem Fahrzeug, wobei die Rückhaltemittel für den Fall eines Aufpralls des Fahrzeugs vorgesehen sind, wie z.B. einen Frontalaufprall oder Seitenaufprall. Alle drei Varianten umfassen Mittel 4 zum Erkennen eines Aufpralls, die im Falle eines Aufpralls ein Anforderungssignal 5 für die Rückhaltemittel erzeugen, die für die jeweils vorliegende Aufprallart vorgesehen sind. Des Weiteren sind bei allen drei Varianten Mittel 6 und/oder 7 zum Erkennen einer Drehbewegung des Fahrzeugs um mindestens eine Fahrzeugachse - Längsachse (x) und/oder Querachse (y) - vorgesehen, die ein entsprechendes Statussignal 8 oder 9 erzeugen.

Erfindungsgemäß umfasst jede der Anordnungen 1, 2 oder 3 eine Schaltung 11, 21 oder 31 zum Erzeugen eines Auslösesignals 10, die das Anforderungssignal 5 mit dem Statussignal 8 und/oder 9 verknüpft, so dass bei der Entscheidung über das Auslösen der Rückhaltemittel die Informationen über das etwaige Auftreten bzw. Vorliegen einer Drehbewegung berücksichtigt werden.

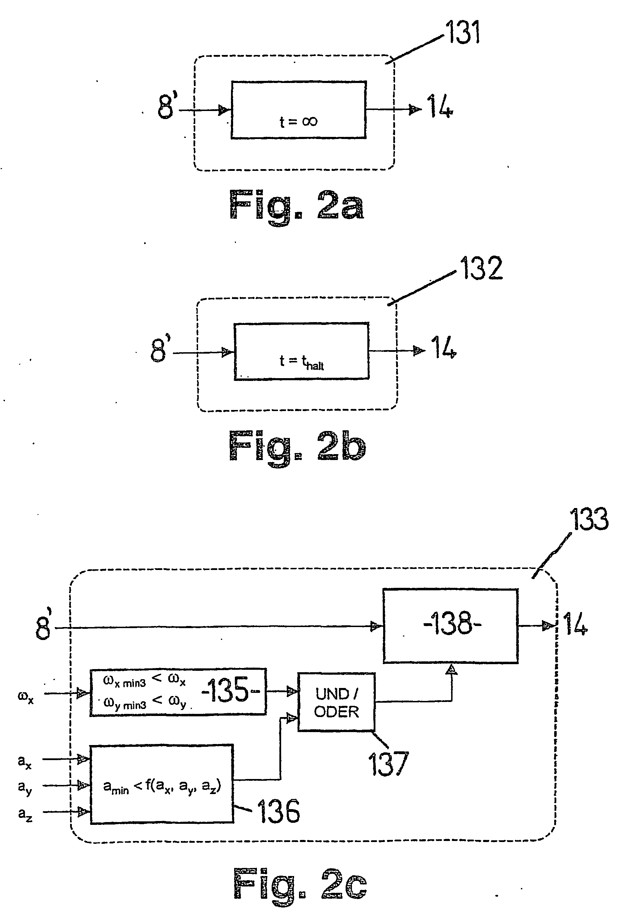

Bei jedem der hier dargestellten Ausführungsbeispiele umfasst die Schaltung 11, 21 oder 31 ein Halteglied 13, dessen Funktion nur dann zum Tragen kommt, wenn eine kritische Drehbewegung erkannt worden ist. In diesen Fällen bewirkt das Halteglied 13, dass die Rückhaltemittel bei einem Aufprall für einen Zeitraum tₕₐₗₜ gesperrt werden. Das Halteglied 13 ist so konzipiert, dass es das Auslösen der Rückhaltemittel bzw. das Erzeugen eines entsprechenden Auslösesignals ansonsten nicht beeinflusst. Auf die unterschiedlichen Realisierungsmöglichkeiten für ein derartiges Halteglied 13 wird nachfolgend in Verbindung mit den Figuren 2a bis 2d noch näher eingegangen.

Bei der in Fig. 1a dargestellten Anordnung 1 ermöglichen die Mittel 6 eine Vorhersage, ob ein Überrollvorgang zu erwarten ist, d.h. ob ein Fahrzeugüberschlag unmittelbar bevorsteht. Eine derartige Vorhersage kann beispielsweise auf Informationen über die aktuelle Winkellage (αₓ und/oder α_{y}) des Fahrzeugs in Verbindung mit Informationen über die aktuelle Winkelgeschwindigkeit (ωₓ und/oder ω_{y}) des Fahrzeugs basieren. In diesem Falle wird ein Überrollvorgang immer dann vorausgesagt, wenn die aktuelle Winkellage (αₓ und/oder α_{y}) einen entsprechenden Schwellwert (α_{x min2} und/oder α_{y min2}) überschreitet und die aktuelle Winkelgeschwindigkeit (ωₓ und/oder ω_{y}) ebenfalls einen entsprechenden Schwellwert (ω_{x min} und/oder ω_{y min}) überschreitet. Das Statussignal 8 wird bei 12 invertiert. Das invertierte Statussignal 8' wird dann dem Eingang des Halteglieds 13 zugeführt, dessen Ausgangssignal bei 14 mit dem Anforderungssignal 5 verknüpft wird. Je nach Zustand des Anforderungssignals 5 und des Statussignals 8 sowie je nach Art des Haltegliedes 13 wird als Ergebnis dieser Verknüpfung ein Auslösesignal 10 für die Rückhaltemittel erzeugt.

Beim Auftreten einer Aufprallsituation liegt das Anforderungssignal 5 auf logisch 1. Normalerweise wird kein Überrollvorgang vorausgesagt, so dass das Statussignal 8 auf logisch 0 liegt und dementsprechend das invertierte Statussignal 8' auf logisch 1. Solange kein Überrollvorgang vorausgesagt wird, gibt das Halteglied 13 den Zustand des invertierten Statussignals 8' direkt an das nachgeschaltete UND-Gatter 15 weiter. Da dann an beiden Eingängen des UND-Gatters 15 eine logische 1 anliegt, wird ein Auslösesignal 10 für die angeforderten Rückhaltemittel erzeugt.

Wenn beim Auftreten einer Aufprallsituation ein Überrollvorgang vorausgesagt wird, liegt das Statussignal 8 auf logisch 1 und dementsprechend das invertierte Statussignal 8' auf logisch 0. Dieser Zustand wird durch das Halteglied 13 für einen definierten Zeitraum tₕₐₗₜ aufrechterhalten, so dass am UND-Gatter 15 logisch 1 und logisch 0 anliegen. Erst nach Ablauf von tₕₐₗₜ wird dem UND-Gatter 15 das dann anliegende aktuelle invertierte Statussignal 8' zugeführt, das - wie bereits erwähnt - in der Regel auf logisch 1 liegt. Dementsprechend wird in diesem Falle erst nach Ablauf von tₕₐₗₜ ein Auslösesignal 10 für die angeforderten Rückhaltemittel erzeugt.

Bei der in Fig. 1b dargestellten Anordnung 2 soll das Auslösen der Rückhaltemittel bei einem Aufprall des Fahrzeugs erst dann gesperrt bzw. verzögert werden, wenn auch tatsächlich ein Überrollvorgang stattfindet, was mit Hilfe der Mittel 7 ermittelt wird. Dazu wird die aktuelle Winkellage (αₓ und/oder α_{y}) des Fahrzeugs überwacht und mit einem entsprechenden Schwellwert (α_{x min2} und/oder α_{y min2}) verglichen. Wenn die aktuelle Winkellage (αₓ und/oder α_{y}) diesen Schwellwert (α_{x min2} und/oder α_{y min2}) überschreitet, wird vom Vorliegen einer Überrollsituation ausgegangen, und das Statussignal 9 wird auf 1 gesetzt. Ansonsten entspricht die in Fig. 1b dargestellte Anordnung der in Fig. 1a dargestellten Anordnung.

Bei der in Fig. 1c dargestellten Anordnung 3 sind die in Verbindung mit Fig. 1a beschriebenen Mittel 6, die die Vorhersage eines Überrollvorgangs erlauben, mit den in Verbindung mit Fig. 1b beschriebenen Mitteln 7 zum Erkennen eines Überrollvorgangs kombiniert worden, so dass die Funktion des Halteglieds 13 nur dann zum Tragen kommt, wenn sowohl ein Überrollvorgang vorausgesagt wird als auch die aktuelle Winkellage (αₓ und/oder α_{y}) einen bestimmten Schwellwert (α_{*x* min2} und/oder α_{y min2}) überschreitet. Die beiden Statussignale 8 und 9 werden hier einem UND-Gatter 16 zugeführt, dessen invertiertes Ausgangssignal dann das Eingangssignal für das Halteglied 13 bildet. Ansonsten entspricht die in Fig. 1c dargestellte Anordnung den in den Figuren 1a und 1b dargestellten Anordnungen.

An dieser Stelle sei angemerkt, dass die Schwellwerte für die Winkellagen α_{x min1} und/oder α_{y min1} und α_{x min2} und/oder α_{y min2} sowie der Schwellwert für die Winkelgeschwindigkeit ω_{x min} und/oder ω_{y min} nicht nur für jede Raumrichtung x und y sondern auch für jedes Rückhaltemittel individuell festgelegt werden können. Dadurch kann beispielsweise erreicht werden, dass das Auslösen der Rückhaltemittel bei Frontalunfällen nur dann gesperrt wird, wenn sich das Fahrzeug um mindestens 180° um seine x- oder y-Achse gedreht hat. In diesen Fällen ist davon auszugehen, dass das Dach eingedrückt wurde und der Fahrzeuginnenraum verkleinert ist. Im Unterschied dazu sollten die Rückhaltemittel, die einem Seitenaufprall zugeordnet sind, schon dann gesperrt werden, wenn sich das Fahrzeug um mindestens 90° um seine x-Achse gedreht hat. In der Regel befinden sich die Insassen in diesem Fall in einer ungünstigen Position, so dass das Auslösen eines Seitenairbags ein zusätzliches Verletzungsrisiko birgt.

Wie bereits erwähnt, sind in den Figuren 2a bis 2d unterschiedliche Realisierungsmöglichkeiten 131, 132, 133, und 134 für ein Halteglied dargestellt.

Bei der in Fig. 2a dargestellten Variante bewirkt das Halteglied 131 eine dauerhaft Sperrung (tₕₐₗₜ = ∞) der für die jeweilige Aufprallsituation bestimmten Rückhaltemittel, wenn eine kritische Drehbewegung des Fahrzeugs erkannt worden ist.

Bei der in Fig. 2b dargestellten Variante werden die für die jeweilige Aufprallsituation bestimmten Rückhaltemittel nur für einen begrenzten, definierten Zeitraum (tₕₐₗₜ= const.) gesperrt, wenn eine kritische Drehbewegung des Fahrzeugs erkannt worden ist.

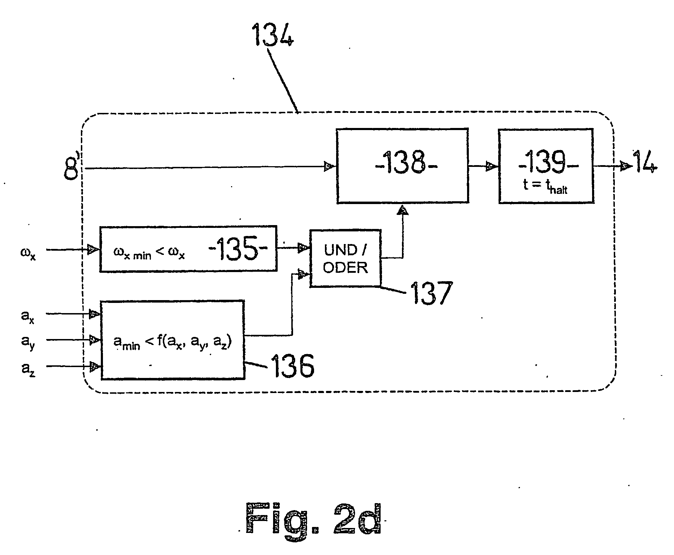

Bei den in den Figuren 2c und 2d dargestellten Varianten werden die Rückhaltemittel im Fall eines Aufpralls mindestens so lange gesperrt, bis das Fahrzeug zur Ruhe gekommen ist, nachdem eine kritische Drehbewegung erkannt worden ist. Um zu erkennen, ob das Fahrzeug zur Ruhe gekommen ist, werden hier zum einen die Wankwinkelgeschwindigkeit ωₓ bzw. die Nickwinkeigeschwindigkeit ω_{y} und zum anderen die drei linearen Beschleunigungen aₓ, a_{y} und a_{z} des Fahrzeugs überwacht. Mit Hilfe des Halteglieds 133 bzw. 134 wird bei 135 überwacht, ob die Winkelgeschwindigkeiten ωₓ und ω_{y} einen entsprechend definierten Schwellwert ω_{x min3} bzw. ω_{y min3} unterschreiten, und bei 136, ob eine Funktion f(aₓ, a_{y}, a_{z}) einen Schwellwert aₘᵢₙ unterschreitet. Diese Funktion f(aₓ, a_{y}, a_{z}) kann beispielsweise als f(aₓ, a_{y}, a_{z}) = |aₓ| + |a_{y}| + |a_{z}| oder als f(aₓ, a_{y}, a_{z}) = max (|aₓ|, |a_{y}|, |a_{z}|) realisiert sein. Wenn eine dieser beiden Bedingungen oder auch beide Bedingungen erfüllt sind, wird davon ausgegangen, dass das Fahrzeug zur Ruhe gekommen ist. Die Verknüpfung der entsprechenden Signale wird hier mit Hilfe eines UND/ODER-Gatters 137 realisiert. Das Ausgangssignal dieses UND/ODER-Gatters wird einem ersten Halteelement 138 zugeführt. Im Fall der in Fig. 2c dargestellten Variante hebt das Halteelement 138 die Sperrung der Rückhaltemittel auf, wenn das Fahrzeug zur Ruhe gekommen ist. Im Fall der in Fig. 2d dargestellten Variante wird die Sperrung der Rückhaltemittel auch, wenn das Fahrzeug bereits zur Ruhe gekommen ist, noch über einen zusätzlichen definierten Zeitraum t aufrechterhalten. Dafür ist ein zweites Halteelement 139 vorgesehen, das dem ersten Halteelement 138 nachgeschaltet ist.

## Patentansprüche

1. Anordnung zum Erzeugen eines Auslösesignals (10) für Rückhaltemittel in einem Fahrzeug, wobei die Rückhaltemittel für den Fall eines Aufpralls des Fahrzeugs - Frontalaufprall, Seitenaufprall - vorgesehen sind, umfassend
- Mittel zum Erkennen eines Aufpralls (4), die im Falle eines Aufpralls ein Anforderungssignal (5) für die der Aufprallart entsprechenden Rückhaltemittel erzeugen, und
- Mittel zum Erkennen einer Drehbewegung (6, 7) des Fahrzeugs um mindestens eine Fahrzeugachse - Längsachse (x) und/oder Querachse (y) -, die ein entsprechendes Statussignal (7, 8) erzeugen,
- eine Schaltung (11, 21, 31) zum Erzeugen eines Auslösesignals (10), die das Anforderungssignal (5) mit dem Siatussignal (7, 8) verknüpft, so dass bei der Entscheidung über das Auslösen der Rückhaltemittel die Informationen über das etwaige Auftreten bzw. Vorliegen einer Drehbewegung berücksichtigt werden
**dadurch gekennzeichnet, dass** die Schaltung (11, 21, 31) mindestens ein Halteglied (13) umfasst, wobei das Halteglied (13) einen Zeitraum tₕₐₗₜ bestimmt, in dem kein Auslösesignal (10) erzeugt werden kann, wenn eine kritische Drehbewegung erkannt worden ist.

2. Anordnung nach Anspruch 1, **dadurch gekennzeichnet, dass** Mittel (7) zum Erfassen der aktuellen Winkellage (αₓ und/oder α_{y}) vorgesehen sind, wobei vom Vorliegen einer kritischen Drehbewegung ausgegangen wird, wenn die aktuelle Winkellage (αₓ und/oder α_{y}) einen ersten definierten Schwellwert (α_{x min1} und/oder α_{y min1}) überschreitet.

3. Anordnung nach einem der Ansprüche 1 oder 2, **dadurch gekennzeichnet, dass** Mittel (6) zum Voraussagen eines Überrollvorgangs vorgesehen sind, wobei vom Vorliegen einer kritischen Drehbewegung ausgegangen wird, wenn ein Überrollvorgang vorausgesagt wird.

4. Anordnung nach den Ansprüchen 2 und 3, **dadurch gekennzeichnet, dass** Mittel zum Erfassen und Auswerten der aktuellen Winkelgeschwindigkeit des Fahrzeugs (ωₓ und/oder ω_{y}) vorgesehen sind, wobei ein Überrollvorgang vorausgesagt wird, wenn ein Schwellwert überschritten wird, der durch f(αₓ, ωₓ) bzw. f(α_{y}, ω_{y}) gegeben ist.

5. Anordnung nach einem der Ansprüche 1 bis 4, **dadurch gekennzeichnet, dass** das Halteglied (131) den Zeitraum tₕₐₗₜ als unendlich bestimmt, so dass die Rückhaltemittel dauerhaft gesperrt sind.

6. Anordnung nach einem der Ansprüche 1 bis 4, **dadurch gekennzeichnet, dass** das Halteglied (133, 134) den Zeitraum tₕₐₗₗ so bestimmt, dass die Rückhaltemittel mindestens solange gesperrt sind, bis das Fahrzeug zur Ruhe gekommen ist.

7. Anordnung nach Anspruch 6 **dadurch gekennzeichnet, dass** Mittel zum Erfassen und Auswerten der linearen Beschleunigung (aₓ, a_{y} und/oder a_{z}) vorgesehen sind, um zu bestimmen, wann das Fahrzeug zur Ruhe gekommen ist.

8. Verfahren zum Auslösen von Rückhaltemitteln in einem Fahrzeug, wobei die Rückhaltemittel für den Fall eines Aufpralls des Fahrzeugs - Frontalaufprall, Seitenaufprall - vorgesehen sind,
- bei dem Informationen über einen etwaigen Aufprall des Fahrzeugs erfasst und ausgewertet werden und
- bei dem Informationen über eine etwaige Drehbewegung des Fahrzeugs um mindestens eine Fahrzeugachse-Längsachse (x) und/oder Querachse (y) - erfasst und ausgewertet werden
wobei bei der Entscheidung über das Auslösen der Rückhaltemittel im Fall eines Aufpralls die Informationen über das etwaige Auftreten bzw. Vorliegen einer Drehbewegung des Fahrzeugs berücksichtigt werden **dadurch gekennzeichnet, dass** die Informationen über das etwaige Auftreten bzw. Vorliegen einer Drehbewegung des Fahrzeugs ausgewertet werden, um eine kritische Drehbewegung zu erkennen, und dass die Rückhaltemittel im Fall eines Aufpralls für einen Zeitraum tₕₐₗₜ gesperrt werden, wenn eine kritische Drehbewegung erkannt worden ist.

9. Verfahren nach Anspruch 8, **dadurch gekennzeichnet, dass** die aktuelle Winkellage (αₓ, und/oder α_{y}) des Fahrzeugs erfasst und ausgewertet wird und dass eine Fahrzeugbewegung als kritische Drehbewegung erkannt wird, wenn die aktuelle Winkellage (αₓ und/oder α_{y}) einen ersten definierten Schwellwert (α_{x min1} und/oder α_{y min1}) überschreitet.

10. Verfahren nach Anspruch 9, **dadurch gekennzeichnet, dass** die aktuelle Winkelgeschwindigkeit (ωₓ und/oder ω_{y}) des Fahrzeugs erfasst und ausgewertet wird und dass ein Überrollvorgang vorausgesagt und damit vom Vorliegen einer kritischen Drehbewegung ausgegangen wird, wenn ein Schwellwert überschritten wird, der durch f(αₓ, ωₓ) bzw. f(α_{y}, ω_{y}) gegeben ist.

11. Verfahren nach einem der Ansprüche 8 bis 10, **dadurch gekennzeichnet, dass** die Rückhaltemittel im Fall eines Aufpralls dauerhaft (tₕₐₗₜ = ∞) gesperrt werden, wenn eine kritische Drehbewegung erkannt worden ist.

12. Verfahren nach einem der Ansprüche 8 bis 16, **dadurch gekennzeichnet, dass** die Rückhaltemittel im Fall eines Aufpralls mindestens solange gesperrt werden, bis das Fahrzeug zur Ruhe gekommen ist, wenn eine kritische Drehbewegung erkannt worden ist.

13. Verfahren nach einem der Ansprüche 10 oder 11 und Anspruch 15, **dadurch gekennzeichnet dass** davon ausgegangen wird, dass das Fahrzeug zur Ruhe gekommen ist, wenn die aktuelle Winkellage (αₓ und/oder α_{y}) einen dritten definierten Schwellwert (α_{x min} und/oder α_{y min3}) unterschreitet.

14. Verfahren nach einem der Ansprüche 9 oder 10 und einem der Ansprüche 15 oder 16, **dadurch gekennzeichnet, dass** die lineare Beschleunigung (aₓ, a_{y} und/oder a_{z}) des Fahrzeugs erfasst wird und dass davon ausgegangen wird, dass das Fahrzeug zur Ruhe gekommen ist, wenn eine Funktion der aktuellen linearen Beschleunigung f(aₓ, a_{y} und/oder a_{z}) einen definierten Schwellwert aₘᵢₙ unterschreitet.

## Claims

1. Arrangement for generating a triggering signal (10) for restraint means in a vehicle, with the restraint means being provided in case the vehicle is involved in an impact - frontal impact, side impact -, comprising
- means for identifying an impact (4) which, in the event of an impact, generate a request signal (5) for the restraint means which correspond to the type of impact, and
- means for identifying rotation (6, 7) of the vehicle about at least one vehicle axis - longitudinal axis (x) and/or transverse axis (y) -, which means generate a corresponding status signal (8, 9),
- a circuit (11, 21, 31) for generating a triggering signal (10) which links the request signal (5) to the status signal (8, 9), with the result that information about the possible occurrence or presence of rotation is taken into account when making the decision about triggering the restraint means,
**characterized in that** the circuit (11, 21, 31) comprises at least one holding element (13), with the holding element (13) determining a period of time t_{hold} in which a triggering signal (10) cannot be generated when critical rotation has been identified.

2. Arrangement according to Claim 1, **characterized in that** means (7) for detecting the current angular position (αₓ and/or α_{y}) are provided, with the presence of critical rotation being assumed when the current angular position (αₓ and/or α_{y}) exceeds a first defined threshold value (α_{x min1} and/or α_{y min1}) .

3. Arrangement according to either of Claims 1 or 2, **characterized in that** means (6) for predicting a roll-over process are provided, with the presence of critical rotation being assumed when a roll-over process is predicted.

4. Arrangement according to Claims 2 and 3, **characterized in that** means for detecting and evaluating the current angular velocity of the vehicle (ωₓ and/or ω_{y}) are provided, with a roll-over process being predicted when a threshold value which is given by f(αₓ, ωₓ) and/or f(α_{y}, ω_{y}) is exceeded.

5. Arrangement according to one of Claims 1 to 4, **characterized in that** the holding element (131) determines the period of time t_{hold} as being infinite, with the result that the restraint means are permanently blocked.

6. Arrangement according to one of Claims 1 to 4, **characterized in that** the holding element (133, 134) determines the period of time t_{hold} such that the restraint means are blocked at least until the vehicle has stopped.

7. Arrangement according to Claim 6, **characterized in that** means for detecting and evaluating the linear acceleration (αₓ, α_{y} and/or α_{z}) are provided in order to determine when the vehicle has stopped.

8. Method for triggering restraint means in a vehicle, with the restraint means being provided in case the vehicle is involved in an impact - frontal impact, side impact -,
- in which information about a possible impact of the vehicle is detected and evaluated, and
- in which information about possible rotation of the vehicle about at least one vehicle axis - longitudinal axis (x) and/or transverse axis (y) - is detected and evaluated,
with the information about the possible occurrence or presence of rotation of the vehicle being taken into account when making the decision about triggering the restraint means in the event of an impact,
**characterized in that** the information about the possible occurrence or presence of rotation of the vehicle is evaluated in order to identify critical rotation, and **in that**, in the event of an impact, the restraint means are blocked for a period of time t_{hold} when critical rotation has been identified.

9. Method according to Claim 8, **characterized in that** the current angular position (αₓ and/or α_{y}) of the vehicle is detected and evaluated, and **in that** movement of the vehicle is identified as critical rotation when the current angular position (αₓ and/or α_{y}) exceeds a first defined threshold value (α_{x min1} and/or αyₘᵢₙ₁).

10. Method according to Claim 9, **characterized in that** the current angular velocity (ωₓ and/or ω_{y}) of the vehicle is detected and evaluated, and **in that** a roll-over process is predicted and the presence of critical rotation is therefore assumed when a threshold value which is given by f(αₓ, ωₓ) and/or f(α_{y}, ω_{y}) is exceeded.

11. Method according to one of Claims 8 to 10, **characterized in that**, in the event of an impact, the restraint means are permanently (t_{hold} = ∞) blocked when critical rotation has been identified.

12. Method according to one of Claims 8 to 10, **characterized in that**, in the event of an impact, the restraint means are blocked at least until the vehicle has stopped when critical rotation has been identified.

13. Method according to either of Claims 10 or 11, **characterized in that** it is assumed that the vehicle has stopped when the current angular position (αₓ and/or α_{y}) falls below a third defined threshold value (α_{x min3} and/or α_{y min3}).

14. Method according to either of Claims 9 or 10, **characterized in that** the linear acceleration (αₓ, α_{y} and/or α_{z}) of the vehicle is detected, and **in that** it is assumed that the vehicle has stopped when a function of the current linear acceleration f(αₓ, α_{y} and/or α_{z}) falls below a defined threshold value a min.

## Revendications

1. Dispositif pour générer un signal de déclenchement (10) de moyens de retenue dans un véhicule, les moyens de retenue en cas de collision du véhicule (choc frontal ou latéral), comprenant
- des moyens pour reconnaître d'une collision (4) qui génèrent en cas de collision un signal de demande (5) pour les moyens de retenue correspondant au type de choc et
- des moyens pour reconnaître d'un mouvement de rotation (6, 7) du véhicule autour d'au moins un axe du véhicule (axe longitudinal (x) et/ou axe transversal (y)) qui génèrent un signal d'état correspondant (7, 8),
- un couplage (11, 21, 31) pour générer un signal de déclenchement (10) qui relie le signal de demande (5) au signal d'état (7, 8) de manière à ce que les informations relatives à l'apparition et/ou à la présence éventuelle d'un mouvement de rotation soient prises en compte dans la décision de déclencher ou non les moyens de retenue,
**caractérisé en ce que**
le couplage (11, 21, 31) comprend au moins un organe d'arrêt (13) qui détermine un intervalle de temps t_{arrêt} pendant lequel aucun signal de déclenchement (10) ne peut être généré lorsqu'un mouvement de rotation critique a été reconnu.

2. Dispositif selon la revendication 1,
**caractérisé par**
des moyens (7) de détection de la position angulaire réelle (αₓ et/ou α_{y}) permettant de déduire la présence d'un mouvement de rotation critique lorsque la position angulaire réelle (αₓ et/ou α_{y}) dépasse une première valeur de seuil définie (αₓₘᵢₙ₁ et/ou α_{ymin1}).

3. Dispositif selon l'une quelconque des revendications 1 ou 2,
**caractérisé par**
des moyens (6) prédictif d'une action de retournement permettant de, déduire la présence d'un mouvement de rotation critique lorsqu'un retournement est prédit.

4. Dispositif selon l'une quelconque des revendications 2 et 3,
**caractérisé en ce que**
des moyens de détection et d'évaluation de la vitesse angulaire réelle du véhicule (ωₓ et/ou ω_{y}) permettant de conclure à un retournement lorsqu'une valeur de seuil donnée par f(αₓ, ωₓ) et/ou f(α_{y}, ω_{y}) est dépassée.

5. Dispositif selon l'une quelconque des revendications 1 à 4,
**caractérisé en ce que**
l'organe d'arrêt (131) détermine comme infini l'intervalle de temps t_{arrêt} de manière à bloquer les moyens de retenue durablement.

6. Dispositif selon l'une quelconque des revendications 1 à 4,
**caractérisé en ce que**
l'organe d'arrêt (133, 134) détermine l'intervalle de temps t_{arrêt} de manière à bloquer les moyens dispositifs de retenue au moins jusqu'à ce que le véhicule soit à l'arrêt.

7. Dispositif selon la revendication 6,
**caractérisé en ce que**
des moyens de détection et d'évaluation de l'accélération linéaire (aₓ, a_{y} et/ou a_{z}) sont prévus pour déterminer le moment où le véhicule est à arrêté.

8. Procédé de déclenchement des moyens de retenue dans un véhicule, ces moyens de retenue étant prévus en cas de collision du véhicule (choc frontal ou latéral), selon lequel
- on détecte et on évalue des informations relatives à une collision éventuelle du véhicule, et
- on détecte et on évalue des informations relatives à un mouvement de rotation éventuel du véhicule autour d'au moins un axe du véhicule (axe longitudinal (x) et/ou axe transversal (y)), et
- les informations relatives à l'apparition et/ou à la présence éventuelle d'un mouvement de rotation du véhicule sont prises en compte dans la décision de déclencher ou non les moyens de retenue en cas de collision,
**caractérisé en ce que**
les informations relatives à l'apparition et/ou à la présence éventuelle d'un mouvement de rotation du véhicule sont évaluées pour reconnaître un mouvement de rotation critique, et en cas de collision les moyens de retenue sont bloqués pour un intervalle de temps t_{Arrêt} lorsqu'un mouvement de rotation critique a été reconnu.

9. Procédé selon la revendication 8,
**caractérisé en ce que**
la position angulaire réelle (αₓ₁ et/ou α_{y}) du véhicule est détectée et évaluée et on reconnaît mouvement du véhicule comme un mouvement de rotation critique lorsque la position angulaire réelle (αₓ et/ou α_{y}) dépasse une première valeur de seuil définie (αₓₘᵢₙ₁ et/ou α_{ymin1}).

10. Procédé selon la revendication 9,
**caractérisé en ce que**
la vitesse angulaire réelle (ωₓ et/ou ω_{y}) du véhicule est détectée et évaluée, et une opération de retournement est prédite et on en déduit la présence d'un mouvement de rotation critique lorsqu'une valeur de seuil donnée par f(αₓ, ωₓ) et/ou (α_{y}, ω_{y}) est dépassée.

11. Procédé selon l'une quelconque des revendications 8 à 10,
**caractérisé en ce que**
les moyens de retenue en cas de collision sont bloqués durablement (t_{arrêt} = ∞) lorsqu'un mouvement de rotation critique a été reconnu.

12. Procédé selon l'une quelconque des revendications 8 à 10,
**caractérisé en ce que**
les moyens de retenue en cas de collision sont bloqués au moins jusqu'à ce que le véhicule soit à l'arrêt lorsqu'un mouvement de rotation critique a été reconnu.

13. Procédé selon l'une quelconque des revendications 10 ou 11 et selon la revendication 15,
**caractérisé en ce qu'** on conclut que le véhicule est arrêté lorsque la position angulaire réelle (αₓ et/ou α_{y}) est inférieure à une troisième valeur de seuil définie (αₓₘᵢₙ₃ et/ou α_{ymin3}).

14. Procédé selon l'une quelconque des revendications 9 ou 10 et l'une quelconque des revendications 15 ou 16,
**caractérisé en ce qu'**
on détecte l'accélération linéaire (aₓ, a_{y} et/ou a_{z}) du véhicule et on conclut que le véhicule est à l'arrêt lorsqu'une fonction de l'accélération linéaire réelle f(aₓ, a_{y} et/ou a_{z}) est inférieure à une valeur de seuil définie aₘᵢₙ.
